# EUROPÄISCHE PATENTSCHRIFT

(11) **EP 3 362 654 B1**
(45) Veröffentlichungstag und Bekanntmachung des Hinweises auf die Patenterteilung: **11.10.2023**
(21) Anmeldenummer: 16777947.9
(22) Anmeldetag: 26.09.2016
(51) Int. Cl.: F01N 3/20, F01N 9/00, B60K 15/035

(54) **BETRIEBSFLÜSSIGKEITSBEHÄLTERSYSTEM FÜR KRAFTFAHRZEUGE UND VERFAHREN ZUM BEFÜLLEN EINES KRAFTSTOFFBEHÄLTERS EINES BETRIEBSFLÜSSIGKEITSBEHÄLTERSYSTEMS**
OPERATING FLUID CONTAINER SYSTEM FOR MOTOR VEHICLES AND METHOD FOR FILLING A FUEL CONTAINER OF AN OPERATING FLUID CONTAINER SYSTEM
SYSTÈME DE RÉSERVOIRS DE LIQUIDE DE SERVICE POUR VÉHICULES AUTOMOBILES ET PROCÉDÉ DE REMPLISSAGE D'UN RÉSERVOIR DE CARBURANT D'UN SYSTÈME DE RÉSERVOIRS DE LIQUIDE DE SERVICE

(30) Priorität: 13.10.2015 DE 102015219858
(43) Veröffentlichungstag der Anmeldung: 22.08.2018
(73) Patentinhaber: Kautex Textron GmbH & Co. KG, 53229 Bonn (DE)
(72) Erfinder: WOLF, Hartmut, 53639 Königswinter (DE)
(74) Vertreter: Richly & Ritschel Patentanwälte PartG mbB
(86) Internationale Anmeldenummer: PCT/EP2016/072839
(87) Internationale Veröffentlichungsnummer: WO 2017/063854

(56) Entgegenhaltungen:
- EP-A1- 2 889 462
- WO-A1-2009/001195
- DE-A1- 19 901 080
- DE-A1-102010 022 559
- DE-A1-102011 104 384
- US-A1- 2002 153 374
- US-A1- 2013 319 070

## Beschreibung

Die vorliegende Erfindung betrifft ein Betriebsflüssigkeitsbehältersystem für Kraftfahrzeuge, wobei das Betriebsflüssigkeitsbehältersystem einen Kraftstoffbehälter mit einem Kraftstofffüllstandsensor und einen Harnstoffbehälter mit einem Harnstofffüllstandsensor umfasst. Ferner betrifft die vorliegende Erfindung ein Verfahren zum Befüllen eines Kraftstoffbehälters eines erfindungsgemäßen Betriebsflüssigkeitsbehältersystems.

Ein Kraftfahrzeug (im Folgenden als Kfz abgekürzt) mit einem Verbrennungsmotor benötigt für dessen Betrieb Kraftstoff in Form von Ottokraftstoff oder Dieselkraftstoff, der in dem Kraftstoffbehälter mit dem Kfz mitgeführt wird. Ferner wird bei Kfz mit Verbrennungsmotoren, insbesondere mit Dieselmotoren zur Reduktion von Stickoxiden in Abgasen des Kfz eine wässrige Harnstofflösung in den Abgasstrang injiziert. Zu diesem Zweck weist das Kfz einen Harnstoffbehälter zur Bevorratung der wässrigen Harnstofflösung auf.

Damit die Reduktion von Stickoxiden zuverlässig funktioniert, muss das Kfz stets genügend Harnstofflösung im Harnstoffbehälter mitführen. Wenn im Harnstoffbehälter keine Harnstofflösung mehr vorrätig ist, steigt während des Betriebs des Verbrennungsmotors mit Kraftstoff die Stickoxidemission des Kfz schlagartig an, sodass beispielsweise gesetzlich vorbestimmte Grenzwerte von Stickoxidkonzentrationen im Abgas überschritten werden können.

Damit genügend Harnstofflösung im Harnstoffbehälter vorrätig ist, ist es bei einigen Kfz üblich, dass bei turnusmäßigen Inspektionsbesuchen nach einer vorbestimmten Laufleistung des Kfz (z.B. 30000km nach der letzten Inspektion) der Harnstoffbehälter in einer Inspektionswerkstatt gänzlich mit Harnstofflösung aufgefüllt wird. Dies kann jedoch trotzdem je nach Fahrweise zu dem Problem führen, dass vor Ablauf einer Laufleistung zwischen zwei Inspektionsbesuchen die Harnstofflösung aus dem Harnstoffbehälter in Gänze aufgebraucht ist. Denn bei einer nicht ökonomischen Fahrweise steigt der Harnstofflösungsverbrauch mit dem Kraftstoffverbrauch des Kfz.

Ferner ist es aus dem Stand der Technik bekannt, dass ein Harnstoffbehälter durch den Fahrer des Kfz selber entweder mittels einer Zapfanlage und/oder mittels eines Nachfüllgebindes, beispielsweise in Form einer Kruse-Flasche, aufgefüllt wird. Für den Fahrer ist es jedoch schwierig abzuschätzen, wie viel Harnstofflösung nachzufüllen ist, um eine vorbestimmte Distanz zurücklegen zu können, so dass es regelmäßig dazu kommt, dass die gesamte Harnstofflösung aufgebracht wird, wodurch die Stickoxidemissionen des Kfz massiv ansteigen.

In diesem Zusammenhang ist aus dem Dokument EP 2 889 462 A1 bekannt, einen Abgaskanal eines Motors mit einem Harnstoff-Zugabeventil zu versehen, dem Harnstoffwasser zur Reinigung von Abgas zugeführt wird. Eine Steuervorrichtung berechnet auf der Grundlage einer Restmenge an Kraftstoff in einem Kraftstofftank, der Motorkraftstoff speichert, eine erforderliche Zugabemenge als eine Menge an Harnstoffwasser, die für die Durchführung der Kühlzugabe zur Kühlung des Harnstoffzugabeventils erforderlich ist. Dann gibt die Steuervorrichtung eine Meldung über die Restmenge an Harnstoffwasser aus, wenn eine Restmenge an Harnstoffwasser in einem Tank, der Harnstoffwasser speichert, auf die berechnete erforderliche Zugabemenge sinkt.

Weiter ist aus dem Dokument DE 10 2011 104 384 A1 ein Verfahren zum Betreiben eines Kraftfahrzeugs, das eine Abgasreinigungsvorrichtung mit einem Reduktionsmittel aufweist, bekannt. Dabei erfolgt ein Ermitteln eines durchschnittlichen Kraftstoff-Verbrauchs des Kraftfahrzeugs basierend auf während eines Betriebs des Kraftfahrzeugs ermittelter Daten. Zudem erfolgt ein Ermitteln einer voraussichtlich verbleibenden Reichweite des Kraftfahrzeugs basierend auf dem ermittelten durchschnittlichen Kraftstoff-Verbrauch. Weiterhin erfolgt ein Ermitteln einer momentan in dem Kraftfahrzeug vorhandenen Menge des Reduktionsmittels. Darüber hinaus erfolgt ein Ermitteln, ob die vorhandene Menge des Reduktionsmittels innerhalb der ermittelten voraussichtlich verbleibenden Reichweite des Kraftfahrzeugs einen ersten vorbestimmten Schwellenwert unterschreitet. Falls ermittelt wird, dass die vorhandene Menge des Reduktionsmittels innerhalb der ermittelten voraussichtlich verbleibenden Reichweite des Kraftfahrzeugs den ersten vorbestimmten Schwellenwert unterschreitet, erfolgt ein Ausgeben von Informationen bezüglich des Reduktionsmittels.

Dokument WO 2009/001195 A1 betriff ein Fahrunterstützungssystem für ein Fahrzeug mit einer Abgasemissionssteuerungsvorrichtung, die einen Katalysator enthält, der durch ein Reduktionsmittel wiederhergestellt wird, und mit einem Navigationssystem, das den aktuellen Fahrzeugstandort auf einem Display anzeigt. Das Fahrunterstützungssystem umfasst einen Reduktionsmittel-Füllstandssensor, der die Menge des Reduktionsmittels in einem Reduktionsmitteltank erfasst; und eine Vorrichtung zur Berechnung der zulässigen Fahrstrecke des Fahrzeugs auf der Grundlage der erfassten Menge des Reduktionsmittels. Das Navigationssystem zeigt die Standorte der Reduktionsmittelversorgungspunkte innerhalb der zulässigen Fahrtstrecke des Fahrzeugs vom aktuellen Fahrzeugstandort aus an.

Der vorliegenden Erfindung liegt die Aufgabe zugrunde, ein Betriebsflüssigkeitsbehältersystem bereitzustellen, das eine erhöhte Sicherheit vor Trockenfallen des Harnstoffbehälters bietet.

Diese Aufgabe wird durch ein Betriebsflüssigkeitsbehältersystem mit den Merkmalen des Anspruchs 1 gelöst. Vorteilhafte Ausgestaltungen sind in den von Anspruch 1 abhängigen Ansprüchen beschrieben.

Im Genaueren wird die der vorliegenden Erfindung zugrunde liegende Aufgabe durch ein Betriebsflüssigkeitsbehältersystem gelöst, das einen Kraftstoffbehälter mit einem Kraftstofffüllstandsensor, einen Harnstoffbehälter mit einem Harnstofffüllstandsensor und eine Tanksteuereinrichtung umfasst, die mit dem Kraftstofffüllstandsensor zum Empfangen von einen Füllstand des Kraftstoffbehälters repräsentierenden Daten und mit dem Harnstofffüllstandsensor zum Empfangen von einen Füllstand des Harnstoffbehälters repräsentierenden Daten verbunden ist. Bei dem erfindungsgemäßen Betriebsflüssigkeitsbehältersystem ist dabei die Tanksteuereinrichtung dazu ausgebildet, unter Berücksichtigung der den Füllstand des Kraftstoffbehälters repräsentierenden Daten eine mit der im Kraftstoffbehälter befindlichen Kraftstoffmenge zurücklegbare erste Distanz zu ermitteln. Ferner ist die Tanksteuereinrichtung dazu ausgebildet, unter Berücksichtigung der den Füllstand des Harnstoffbehälters repräsentierenden Daten eine mit der im Harnstoffbehälter befindlichen Harnstoffmenge zurücklegbare zweite Distanz zu ermitteln. Weiterhin ist bei dem erfindungsgemäßen Betriebsflüssigkeitsbehältersystem die Tanksteuereinrichtung dazu ausgebildet, ein Warnsignal auszugeben, wenn die zweite Distanz kleiner oder gleich der ersten Distanz ist. Außerdem umfasst der Kraftstoffbehälter zumindest einen elektrisch und/oder elektromagnetisch und/oder elektromechanisch betätigbaren Aktuator, mittels dem ein Beenden eines Befüllvorganges des Kraftstoffbehälters initiierbar ist; die Tanksteuereinrichtung ist mit dem Aktuator zum Übertragen von Signalen an den Aktuator verbunden; und die Tanksteuereinrichtung ist dazu ausgebildet, an den Aktuator ein Befüllstoppsignal zu übertragen, wenn die zweite Distanz kleiner oder gleich der ersten Distanz ist.

Das erfindungsgemäße Betriebsflüssigkeitsbehältersystem bietet den Vorteil, dass dieses automatisch erkennt/bestimmt, wenn die mit der im Kraftstoffbehälter enthaltenen Kraftstoffmenge zurücklegbare erste Distanz größer ist als die mit der im Harnstoffbehälter enthaltenen Harnstoffmenge zurücklegbare zweite Distanz ist, d.h. wenn die zweite Distanz kleiner oder gleich der ersten Distanz ist. Bei einem entsprechenden Erkennen/Bestimmen wird ein Warnsignal ausgegeben, dass vielfältiger Natur sein kann. Beispielsweise kann es sich bei dem Warnsignal um ein akustisches Warnsignal handeln. Ferner kann das Warnsignal an eine Anzeigeeinrichtung übertragen werden, wo dieses dem Betanker/Fahrer des Kfz visuell angezeigt wird. Wenn der Betanker/Fahrer des Kfz mittels des Warnsignals darüber in Kenntnis gesetzt wird, dass nicht die gesamte Distanz, die mit der im Kraftstoffbehälter enthaltenen Kraftstoffmenge zurücklegbar ist, unter Einspritzen von Harnstofflösung in den Abgasstrang des Kfz zurücklegbar ist, kann dieser entsprechende Gegenmaßnahmen einleiten. Beispielsweise kann der Betanker/Fahrer des Kfz an einer Tankstelle mittels einer Befüllvorrichtung (beispielsweise in Form einer Zapfanlage) Harnstofflösung in den Harnstoffbehälter nachtanken. Weiterhin kann der Fahrer/Betanker des Kfz sein Kfz auch in einer Inspektionswerkstatt überführen, um dort den Harnstoffbehälter mit Harnstofflösung auffüllen zu lassen. Schließlich ist es auch möglich, dass der Betanker/Fahrer des Kfz ein Nachfüllgebinde erwirbt und den Harnstoffbehälter mittels des Harnstoffgebindes nachfüllt.

Ein entsprechend ausgebildetes Betriebsflüssigkeitsbehältersystem bietet den Vorteil, dass ein Befüllvorgang des Kraftstoffbehälters automatisch gestoppt wird, wenn die im Kraftstoffbehälter befindliche/eingefüllte Kraftstoffmenge der Kraftstoffmenge entspricht, die zum Zurücklegen der zweiten Distanz notwendig ist. Folglich wird erreicht, dass nach einem Befüllvorgang des Kraftstoffbehälters mit der in den Kraftstoffbehälter befindlichen Kraftstoffmenge lediglich die Distanz zurückgelegt werden kann, bei der gewährleistet werden kann, dass über die gesamte Distanz die im Harnstoffbehälter befindliche Harnstofflösung in den Abgasstrang injiziert werden kann, so dass eine Entstickung der Abgase weiterhin gewährleistet bleibt. Wenn der Fahrer des Kfz beispielsweise an einer Tankstelle anhält, die zwar Kraftstoff, jedoch keine Harnstofflösung anbietet, kann der Fahrer des Kraftfahrzeugs einfach den Befüllvorgang des Kraftstoffbehälters starten, wobei das Betriebsflüssigkeitsbehältersystems automatisch den Befüllvorgang des Kraftstoffbehälters beendet. Der Fahrer des Kraftfahrzeugs ist somit dahingehend abgesichert, dass die mit der nach dem Befüllvorgang des Kraftstoffbehälters in diesem befindliche Kraftstoffmenge mit dem Kfz eine Distanz zurückgelegt werden kann, für die die im Harnstoffbehälter befindliche Harnstoffmenge ausreichend ist, um eine Entstickung des Abgases zu gewährleisten.

Der Kraftstoffbehälter ist zum Aufnehmen von Dieselkraftstoff oder Ottokraftstoff oder Ethanol ausgebildet. Der Kraftstofffüllstandsensor ist zum Bestimmen eines Füllstandes des Kraftstoffbehälters ausgebildet. Vorzugsweise ist der Kraftstofffüllstandsensor im Kraftstoffbehälter angeordnet. Der Harnstofffüllstandsensor ist zum Bestimmen eines Füllstandes des Harnstoffbehälters ausgebildet. Vorzugsweise ist der Harnstofffüllstandsensor im Harnstoffbehälter angeordnet. Die Verbindung der Tanksteuereinrichtung mit dem Kraftstofffüllstandsensor kann über eine erste Datenleitung erfolgen. Die Verbindung der Tanksteuereinrichtung mit dem Harnstofffüllstandsensor kann über eine zweite Datenleitung erfolgen. Die Verbindung der Tanksteuereinrichtung mit der Anzeigeeinrichtung kann über eine dritte Datenleitung erfolgen. Bei der ersten Datenleitung, der zweite Datenleitung und der dritten Datenleitung kann es sich um kabelgebundene oder um eine drahtlose Datenverbindungen handeln. Die Tanksteuereinrichtung kann als separates Modul ausgebildet sein. Ferner kann die Tanksteuereinrichtung auch als Teil einer Bordelektronik eines Kfz ausgebildet sein.

Die mit der im Harnstoffbehälter befindlichen Harnstoffmenge zurücklegbare zweite Distanz ist so zu verstehen, dass die im Harnstoffbehälter befindliche Harnstoffmenge ausreicht, um über die gesamte zweite Distanz Harnstofflösung in ausreichender Menge zum Entsticken des Abgases in den Abgasstrang des Kraftfahrzeugs zu injizieren. Zum Bestimmen der ersten Distanz kann beispielsweise ein durchschnittlicher Kraftstoffverbrauch des Kfz berücksichtigt werden. Dieser durchschnittliche Kraftstoffverbrauch kann beispielsweise aus einem Bordcomputer des Kfz ausgelesen werden. Zum Bestimmen der zweiten Distanz kann auch ein durchschnittlicher Harnstoffverbrauch des Kfz berücksichtigt werden. Dieser durchschnittliche Harnstoffverbrauch kann beispielsweise mittels der Tanksteuereinrichtung ermittelt werden oder kann auch alternativ und/oder zusätzlich aus einem Bordcomputer des Kfz ausgelesen werden.

Vorzugsweise umfasst das Betriebsflüssigkeitsbehältersystem ferner eine Anzeigeeinrichtung, die mit der Tanksteuereinrichtung zum Übertragen des Warnsignals und/oder der den Füllstand des Kraftstoffbehälters und/oder der den Füllstand des Harnstoffbehälters repräsentierenden Daten verbunden ist. Dabei ist die Anzeigeeinrichtung dazu ausgebildet, dass Warnsignal und/oder die den Füllstand des Kraftstoffbehälters und/oder den Füllstand des Harnstoffbehälters repräsentierenden Daten darzustellen.

Der Vorteil eines entsprechend ausgebildeten Betriebsflüssigkeitsbehältersystems ist, dass der Fahrer/Betanker des Kfz leicht über den Zustand informiert werden kann, dass die mit dem im Kraftstoffbehälter befindlichen Kraftstoff zurücklegbare Strecke größer ist als die mit der im Harnstoffbehälter befindlichen Harnstoffmenge.

Die Anzeigeeinrichtung kann mehrere analoge Anzeigeelemente in Form von analogen Anzeigeinstrumenten aufweisen. Ferner kann die Anzeigeeinrichtung beispielsweise in Form von Lichtlaufleisten ausgebildet sein. Weiterhin kann die Anzeigeeinrichtung durch eine LCD/TFT-Anzeigeeinrichtung ausgebildet sein. Beispielsweise kann die Anzeigeeinrichtung so ausgebildet sein, dass diese ein Füllstandanzeigeelement für den Kraftstoffbehälter aufweist. Ferner kann die Anzeigeeinrichtung ein erstes Reichweitenanzeigeelement aufweisen, mittels dem beispielsweise numerisch die Reichweite angezeigt werden kann, die mit dem im Kraftstoffbehälter enthaltenen Kraftstoff zurücklegbar ist. Weiterhin kann die Anzeigeeinrichtung ein Füllstandanzeigeelement für den Harnstoffbehälter aufweisen. Weiterhin kann die Anzeigeeinrichtung ein zweites Reichweitenanzeigeelement aufweisen, mittels dem die mit der im Harnstoffbehälter enthaltenen Harnstofflösung zurücklegbare Reichweite angezeigt werden kann. Schlussendlich kann die Anzeigeeinrichtung ein Anzeigeelement für das Warnsignal aufweisen. Es Anzeigeelemente das Warnsignal kann beispielsweise in Form von einer Signalleuchte ausgebildet sein.

Alternativ kann die Anzeigeeinrichtung auch als mobiles Endgerät, beispielsweise als Mobiltelefon/Smartphone ausgebildet sein. In diesem Fall werden das Warnsignal und vorzugsweise auch die die Füllstände des Kraftstoffbehälters und/oder des Harnstoffbehälters repräsentierenden Daten auf dem mobilen Endgerät angezeigt.

Weiter vorzugsweise ist das Betriebsflüssigkeitsbehältersystem derart ausgebildet, dass die Anzeigeeinrichtung in einem Fahrzeuginnenraum, insbesondere in/an einer Armaturentafel eines Kraftfahrzeugs, und/oder in/an einer Tankmulde und/oder in/an einer Tankklappe angeordnet ist. Insbesondere kann die Anzeigeeinrichtung an einer Innenseite einer Tankklappe angeordnet sein.

Ein entsprechend ausgebildetes Betriebsflüssigkeitsbehältersystem bietet den Vorteil, dass die Daten, die notwendig sind um zu bestimmen, ob die mit der im Kraftstoffbehälter enthaltenen Kraftstoffmenge zurücklegbare Distanz in Gänze unter Einspritzung von Harnstofflösung in den Abgasstrang des Kfz zurücklegbar ist, für den Fahrer/Betanker nochmals leichter ersichtlich ist.

Gemäß einer vorteilhaften Ausgestaltung des Betriebsflüssigkeitsbehältersystems ist die Tanksteuereinrichtung dazu ausgebildet, zusätzlich zu den vom Kraftstofffüllstandsensor und vom Harnstofffüllstandsensor übertragenen Daten weitere eine Neigung des Betriebsflüssigkeitsbehältersystems repräsentierenden Daten zu empfangen. Dabei ist die Tanksteuereinrichtung dazu ausgebildet, mittels der vom Kraftstofffüllstandsensor und vom Harnstofffüllstandsensor übertragenen Daten und der die Neigung des Betriebsflüssigkeitsbehältersystems repräsentierenden Daten einen Ist-Füllstand des Kraftstoffbehälters und einen Ist-Füllstand des Harnstoffbehälters zu ermitteln.

Der Ist-Füllstand entspricht dem Füllstand des entsprechenden Betriebsflüssigkeitsbehälters (also dem nominalen Füllstand des Betriebsflüssigkeitsbehälters), wenn der Betriebsflüssigkeitsbehälter keine Neigung aufweist, d.h. wenn das Kfz auf einer Ebene ohne Neigung positioniert ist. Unter einem Betriebsflüssigkeitsbehälter ist im vorliegenden Fall ein Kraftstoffbehälter oder ein Harnstoffbehälter zu verstehen. Der Zusammenhang zwischen dem Füllstandsensorsignal, den die Neigung des Betriebsflüssigkeitsbehälters repräsentierenden Daten und dem tatsächlichen Füllgrad des Betriebsflüssigkeitsbehälters (Ist-Füllstand) ist vorzugsweise in einem Korrekturkennfeld gespeichert, das vorzugsweise in der Tanksteuereinrichtung abgespeichert ist.

Die Messung der Raumlage des Kraftfahrzeugs bzw. des Betriebsflüssigkeitsbehälters erfolgt vorzugsweise mit einem fahrzeugeigenen Lagesensor. Zum Erzeugen des Korrekturkennfeldes kann der Betriebsflüssigkeitsbehälter beispielsweise um eine Horizontalachse in 5° Schritten geneigt und der Betriebsflüssigkeitsbehälter in jeder Schräglage um die Vertikalachse und 360° in 5° Schritten rotiert werden. Dabei wird in jedem dieser Schräglagen- und Rotationspunkten eine Höhen-Volumen-Kennlinie erzeugt und in das Korrekturkennfeld eingetragen. Das Korrekturkennfeld dient dann zur Bestimmung der exakten im Betriebsflüssigkeitsbehälter befindlichen Betriebsflüssigkeitsmenge. In dem Korrekturfeld können ferner Temperaturvariationen des Kraftstoffes berücksichtigt sein.

Ein entsprechend ausgebildetes Betriebsflüssigkeitsbehältersystem bietet den Vorteil, dass die tatsächlichen Befüllgrade des Kraftstoffbehälters und des Harnstoffbehälters nochmals mit erhöhter Genauigkeit bestimmbar sind.

Weiter vorzugsweise ist das Betriebsflüssigkeitsbehältersystems derart ausgebildet, dass dieses ferner einen Neigungssensor umfasst, mittels dem die Neigung des Kraftstoffbehälters und/oder des Harnstoffbehälters bestimmbar ist. Dabei ist der Neigungssensor mit der Tanksteuereinrichtung zum Übertragen von die Neigung des Kraftstoffbehälters und/oder die Neigung des Harnstoffbehälters repräsentierenden Daten an die Tanksteuereinrichtung verbunden.

Vorzugsweise ist der zumindest eine Aktuator als Betriebs- und/oder Betankungsentlüftungsventil ausgebildet, das im Kraftstoffbehälter angeordnet ist. Das Betriebs- und/oder Betankungsentlüftungsventil ist elektrisch und/oder elektromagnetisch und/oder elektromechanisch zwischen einer Offenstellung und einer Schließstellung betätigbar. In der Offenstellung des Betriebs- und/oder Betankungsentlüftungsventils ist der Kraftstoffbehälter mittels des Betriebs- und/oder Betankungsentlüftungsventils mit einer Entlüftungsleitung fluidverbunden. In der Schließstellung des Betriebs- und/oder Betankungsentlüftungsventil ist der Kraftstoffbehälter hingegen von der Entlüftungsleitung mittels des Betriebs- und/oder Betankungsentlüftungsventils fluidgetrennt.

Die Verwendung des Betriebs- und/oder Betankungsentlüftungsventils zum Beenden eines Befüllvorganges bietet den Vorteil, dass sowieso für den Betrieb des Kraftstoffbehälters notwendige Ventileinrichtungen verwendet werden, um den Betankungsvorgang elektrisch und/oder elektromagnetisch und/oder elektromechanisch zu beenden, so dass nicht weitere Bauteile im Kraftstoffbehälter einzubauen sind, wodurch die Komplexität des entsprechend ausgebildeten Betriebsflüssigkeitsbehältersystems nicht erhöht wird.

Das Betriebsflüssigkeitsbehältersystem ist vorzugsweise derart ausgebildet, dass der zumindest eine Aktuator als Rückschlagventil ausgebildet ist, das in einem in den Kraftstoffbehälter mündenden Einfüllrohr angeordnet ist. Dabei ist das Rückschlagventil elektrisch und/oder elektromagnetisch und/oder elektromechanisch zwischen einer Offenstellung und einer Schließstellung betätigbar/verstellbar, wobei in der Offenstellung des Rückschlagventils der Kraftstoffbehälter mit dem Einfüllrohr fluidverbunden ist, und wobei in der Schließstellung des Rückschlagventils der Kraftstoffbehälter von dem Einfüllrohr mittels des Rückschlagventils fluidgetrennt ist oder die lichte Weite des Einfüllrohrs mittels des Rückschlagventils reduziert ist.

Weiter vorzugsweise ist das Betriebsflüssigkeitsbehältersystem derart ausgebildet, dass der zumindest eine Aktuator als Störkörper ausgebildet ist, der in einem in den Kraftstoffbehälter mündenden Einfüllrohr angeordnet ist, wobei der Störkörper elektrisch und/oder elektromagnetisch und/oder elektromechanisch zwischen einer Offenstellung und einer Störstellung betätigbar ist, wobei in der Offenstellung des Störkörpers eine lichte Weite des Einfüllrohrs nicht reduziert ist, und wobei in der Störstellung des Störkörpers dieser in das Einfüllrohr hineinragt und die lichte Weite des Einfüllrohrs reduziert.

Weiter vorzugsweise ist das Betriebsflüssigkeitsbehältersystem derart ausgebildet, dass der zumindest eine Aktuator als Elektromagnet ausgebildet ist, der in einem Einfüllstutzen eines in den Kraftstoffbehälter mündenden Einfüllrohr angeordnet ist, wobei der Elektromagnet zwischen einem Aktivzustand und einem Passivzustand betätigbar/verstellbar ist. Durch Aktivieren des Elektromagneten wird ein Schließen eines in das Einfüllrohr eingeführten Zapfventils bewirkt, oder durch Aktivieren des Elektromagneten wird ein Öffnen eines Zapfventils bewirkt.

Die drei zuletzt beschriebenen Ausführungen des Betriebsflüssigkeitsbehältersystems bieten den Vorteil, dass zum Beenden des Befüllvorganges kein Innendruck im Kraftstoffbehälter aufgebaut werden muss, so dass nach Beenden des Befüllvorganges der Kraftstoffbehälter im Wesentlichen drucklos ist. Da kein Innendruck aufgebaut wird, dehnt sich der Kraftstoffbehälter auch nicht aus, so dass die Genauigkeit der Füllmengenbestimmung im Kraftstoffbehälter erhöht ist. Ferner bietet die Tatsache, dass zum Beenden des Befüllvorganges kein Druck im Kraftstoffbehälter aufgebaut werden muss, den Vorteil, dass die in den Kraftstoffbehälter eingefüllte Kraftstoffmenge präziser der in den Kraftstoffbehälter einzufüllenden Kraftstoffmenge entspricht. Denn das in dem Kraftstoffbehälter verbleibende Gasvolumen fungiert nicht als komprimierbare Gasfeder. Die Menge des in das Einfüllrohr eingefüllten Kraftstoffs ist sehr genau bestimmbar, so dass die Genauigkeit der eingefüllten Kraftstoffmenge erhöht ist.

In einer weiteren bevorzugten Ausführungsform ist das Betriebsflüssigkeitsbehältersystem derart ausgebildet, dass der zumindest eine Aktuator als Absperrventil ausgebildet ist, das zwischen dem Kraftstoffbehälter und einem Aktivkohlefilter und/oder zwischen einem Aktivkohlefilter und der Atmosphäre angeordnet ist. Das Absperrventil ist elektrisch und/oder elektromagnetisch und/oder elektromechanisch zwischen einer Offenstellung und einer Schließstellung betätigbar/verstellbar, wobei in der Offenstellung des Absperrventils der Kraftstoffbehälter mittels des Absperrventils mit dem Aktivkohlefilter bzw. mit der Atmosphäre fluidverbunden ist, und wobei in der Schließstellung des Absperrventils der Kraftstoffbehälter von dem Aktivkohlefilter bzw. von der Atmosphäre mittels des Absperrventils fluidgetrennt ist.

Weiter vorzugsweise ist das Betriebsflüssigkeitsbehältersystem derart ausgebildet, dass die Tanksteuereinrichtung eine Signalsendeeinheit zum drahtlosen Senden von Signalen an eine Befüllvorrichtung aufweist.

Somit lässt sich mittels der Tanksteuereinrichtung beispielsweise ein Befüllstoppsignal an die Befüllvorrichtung übertragen, worauf hin die Befüllvorrichtung den Befüllvorgang beendet.

Gemäß einer weiteren vorteilhaften Ausgestaltung des Betriebsflüssigkeitsbehältersystems umfasst dieses ferner einen Qualitätssensor zum Bestimmen einer Konzentration des Harnstoffanteils der im Harnstoffbehälter befindlichen Harnstofflösung. Die Tanksteuereinrichtung ist dazu ausgebildet, vor und nach einem Befüllvorgang des Harnstoffbehälters die Konzentration des Harnstoffanteils der im Harnstoffbehälter befindlichen Harnstofflösung mittels des Qualitätssensors zu ermitteln. Ferner ist die Tanksteuereinrichtung dazu ausgebildet, vor und nach einem Befüllvorgang des Harnstoffbehälters die Menge der im Harnstoffbehälter befindlichen Harnstofflösung mittels des Harnstofffüllstandsensors zu ermitteln. Weiterhin ist die Tanksteuereinrichtung dazu ausgebildet, die Konzentration des Harnstoffanteils der während des Befüllvorganges eingefüllten Harnstofflösung dadurch zu errechnen, dass der Quotient des Produktes der Konzentration der Harnstofflösung vor dem Befüllvorgang mit der Betriebsflüssigkeitsmenge vor dem Befüllvorgang mit der Betriebsflüssigkeitsmenge nach dem Befüllvorgang gebildet wird.

Ferner wird die der vorliegenden Erfindung zugrunde liegende Aufgabe durch ein Verfahren zum Befüllen eines Kraftstoffbehälters eines Betriebsflüssigkeitsbehältersystems mit den Merkmalen des Anspruchs 8 gelöst.

Im Genaueren wird die der vorliegenden Erfindung zugrunde liegende Aufgabe durch ein Verfahren zum Befüllen eines Kraftstoffbehälters eines zusätzlich zu diesem einen Harnstoffbehälter umfassenden Betriebsflüssigkeitsbehältersystems für ein Kraftfahrzeug, wobei das Verfahren folgende Verfahrensschritte umfasst:
- Ermitteln eines Füllstandes des Kraftstoffbehälters;
- Ermitteln einer ersten Distanz, die mit dem im Kraftstoffbehälter befindlichen Kraftstoff mit dem Kraftfahrzeug zurücklegbar ist;
- Ermitteln eines Füllstandes des Harnstoffbehälters;
- Ermitteln einer zweiten Distanz, die mit der im Harnstoffbehälter befindlichen Harnstofflösung mit dem Kraftfahrzeug unter Einspritzung der Harnstofflösung in einen Abgasstrang des Kraftfahrzeugs zurücklegbar ist;
- Ausgeben eines Warnsignals, wenn die zweite Distanz kleiner oder gleich der ersten Distanz ist, und
- Übertragen eines Befüllstopsignals an einen elektrisch und/oder elektromagnetisch und/oder elektromechanisch betätigbaren Aktuator des Kraftstoffbehälters, mittels dem ein Beenden des Befüllvorganges des Kraftstoffbehälters initiierbar ist, wenn die zweite Distanz kleiner oder gleich der ersten Distanz ist.

Weitere Vorteile, Einzelheiten und Merkmale der Erfindung ergeben sich nachfolgend aus dem erläuterten Ausführungsbeispiel. Dabei zeigt:

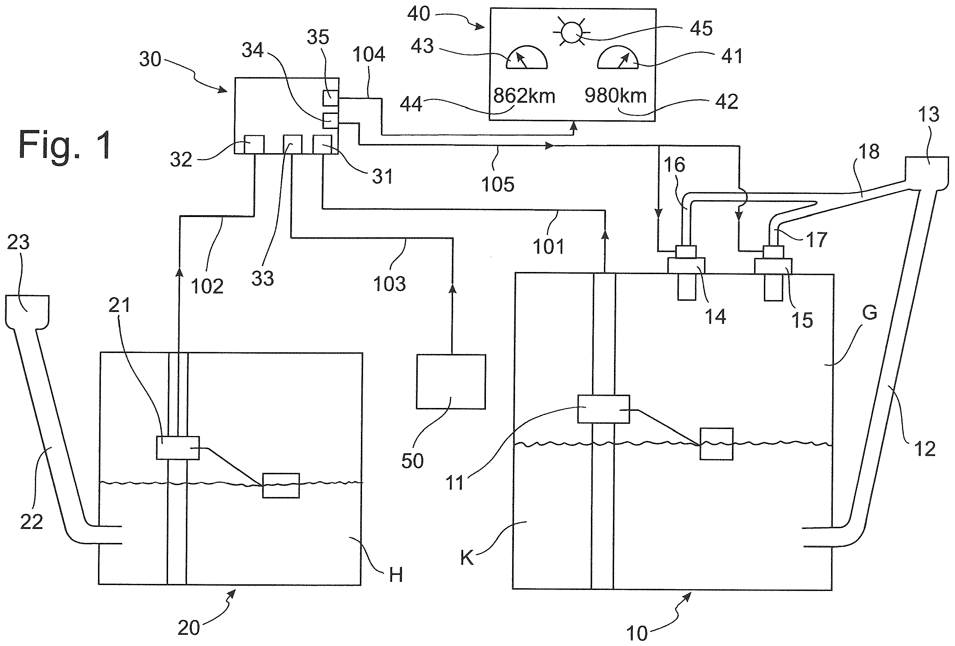

- Figur 1:: eine schematische Darstellung eines erfindungsgemäßen Betriebsflüssigkeitsbehältersystems.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

Figur 1 zeigt schematisch ein erfindungsgemäßes Betriebsflüssigkeitsbehältersystem, das einen Kraftstoffbehälter 10 zur Aufnahme von Kraftstoff K und einen Harnstoffbehälter 20 zur Aufnahme von wässriger Harnstofflösung H umfasst. Der Kraftstoffbehälter 10, der zur Aufnahme von Ottokraftstoff oder insbesondere zur Aufnahme von Dieselkraftstoff ausgebildet sein kann, beinhaltet einen Kraftstofffüllstandsensor 11. Bei dem dargestellten Ausführungsbeispiel weist der Kraftstofffüllstandsensor 11 einen auf dem Kraftstoff K aufschwimmenden Schwimmkörper auf, über dessen Position ein Füllstand des Kraftstoffs K im Kraftstoffbehälter 10 bestimmbar ist. Der Harnstoffbehälter 20 beinhaltet einen Harnstofffüllstandsensor 21, der in dem dargestellten Ausführungsbeispiel ebenfalls einen Schwimmkörper aufweist, der auf der wässrigen Harnstofflösung aufschwimmt und über dessen Position ein Füllstand der wässrigen Harnstofflösung H im Harnstoffbehälter 20 bestimmbar ist.

Der Kraftstoffbehälter 10 ist über ein in den Kraftstoffbehälter 10 mündendes Einfüllrohr 12 mittels eines in Figur 1 nicht dargestellten Zapfventils, das in einen Einfüllstutzen 13 des Einfühlungsrohrs 12 einführbar ist, mit Kraftstoff K befüllbar. Ferner ist der Harnstoffbehälter 20 über ein in den Harnstoffbehälter 20 mündendes Einfüllrohr 22 mittels eines in Figur 1 nicht dargestellten Zapfventils oder mittels eines Nachfüllgebindes, das in einen Einfüllstutzen 23 des Einfüllrohrs 22 einführbar ist, mit wässriger Harnstofflösung H befüllbar.

Aus Figur 1 ist ferner ersichtlich, dass das erfindungsgemäße Betriebsflüssigkeitsbehältersystem ferner eine Tanksteuereinrichtung 30 umfasst. Die Tanksteuereinrichtung 30 ist dabei mit dem Kraftstofffüllstandsensor 11 mittels einer ersten Datenleitung 101 zum Empfangen von einen Füllstand des Kraftstoffbehälters 10 repräsentierenden Daten verbunden. Zu diesem Zweck weist die Tanksteuereinrichtung 30 eine erste Datenempfangseinheit 31. Die Tanksteuereinrichtung 30 ist ferner mit dem Harnstofffüllstandsensor 21 mittels einer zweiten Datenleitung 102 zum Empfangen von einen Füllstand des Harnstoffbehälters 20 repräsentierenden Daten verbunden. Zu diesem Zweck weist die Tanksteuereinrichtung 30 eine zweite Datenempfangseinheit 32 auf.

Bei dem in Figur 1 dargestellten Ausführungsbeispiel weist das Betriebsflüssigkeitsbehältersystems ferner eine Anzeigeeinrichtung 30 auf, die mit der Tanksteuereinrichtung 30 mittels einer vierten Datenleitung 104 zum Übertragen von Daten an die Anzeigeeinrichtung 40 verbunden ist. Zu diesem Zweck weist die Tanksteuereinrichtung 30 eine zweite Datenausgabeeinheit 35 auf, die auch als zweite Signalausgabeeinheit 35 bezeichnet werden kann.

Die Tanksteuereinrichtung 30 ist dazu ausgebildet, unter Berücksichtigung der den Füllstand des Kraftstoffbehälters 10 repräsentierenden Daten eine mit der im Kraftstoffbehälter 10 befindlichen Kraftstoffmenge zurücklegbare erste Distanz zu ermitteln. Bei der Ermittlung dieser ersten Distanz kann beispielsweise aus einem Bordcomputer ein Durchschnittsverbrauch des Kfz, in dem das erfindungsgemäße Betriebsflüssigkeitsbehältersystems verbaut ist, herangezogen werden. Die Tanksteuereinrichtung 30 ist ferner dazu ausgebildet, unter Berücksichtigung der den Füllstand des Harnstoffbehälters 20 repräsentierenden Daten eine mit der im Harnstoffbehälter 20 befindlichen Harnstoffmängel zurücklegbare zweite Distanz zu ermitteln. Dabei ist die mit der im Harnstoffbehälter 20 befindlichen Harnstofflösung zurücklegbare zweite Distanz so zu verstehen, dass die im Harnstoffbehälter 20 befindlichen Harnstofflösung ausreicht, um über die gesamte zweite Distanz wässriger Harnstofflösung K in ausreichender Menge zum Entsticken des Abgases in den Abgasstrang des Kraftfahrzeuges zu injizieren. Die Tanksteuereinrichtung 30 ist dabei derart ausgebildet, dass ein Warnsignal ausgegeben wird, wenn die zweite Distanz kleiner oder gleich der ersten Distanz ist. Das Warnsignal wird dabei über die zweite Datenausgabeeinheit 35 und mittels der vierten Datenleitung 104 an die Anzeigeeinrichtung 40 übermittelt.

Aus Figur 1 ist ersichtlich, dass die Anzeigeeinrichtung 40 ein Kraftstoff-Füllstandanzeigeelement 41 zum Anzeigen der sich im Kraftstoffbehälter 10 befindlichen Kraftstoffmenge aufweist. Ferner weist die Anzeigeeinrichtung 40 ein erstes Reichweitenanzeigeelement 42 auf, das die mit dem im Kraftstoffbehälter 10 befindlichen Kraftstoff K zurücklegbare Distanz anzeigt. Bei dem dargestellten Ausführungsbeispiel beträgt die mit dem im Kraftstoffbehälter 10 befindlichen Kraftstoff K berechnete zurücklegbare Distanz 980 km. Die Anzeigeeinrichtung 40 weist ferner einen Harnstofflösung-Füllstandsanzeigeelement 43 auf, welches zum Anzeigen der sich im Harnstoffbehälter 20 befindlichen Menge an wässriger Harnstofflösung H ausgebildet ist. Ferner weist die Anzeigeeinrichtung 40 ein zweites Reichweitenanzeigeelement 44 auf, das die mit dem im Harnstoffbehälter 20 befindlichen Harnstofflösung zurücklegbare Distanz anzeigt. Bei dem dargestellten Ausführungsbeispiel beträgt die mit dem im Harnstoffbehälter 20 befindlichen Harnstoff H berechnete zurücklegbare Distanz 862 km. D.h., dass im Harnstoffbehälter 20 so viel wässrige Harnstofflösung H bevorratet ist, dass eine Distanz von 862 km unter Einspritzung der wässrigen Harnstofflösung H in einen Abgasstrang des Kraftfahrzeugs enthalten ist. Folglich ist die erste Distanz größer als die zweite Distanz, so dass mittels der Tanksteuereinrichtung 30 über die zweite Datenausgabeeinheit 35 und über die vierte Datenleitung 104 das Warnsignal an die Anzeigeeinrichtung 40 übertragen wird. Die Anzeigeeinrichtung 40 weist zum Anzeigen des Warnsignals ein Anzeigeelement 45 auf, das in dem dargestellten Ausführungsbeispiel als Warnleuchte 45 ausgebildet ist.

Dem Betanker des Kraftstoffbehälters 10 wird somit ein Warnsignal angezeigt, so dass dieser darüber in Kenntnis gesetzt wird, dass nicht genügend wässrige Harnstofflösung H im Harnstoffbehälter 20 enthalten ist, um über die gesamte erste Distanz von 980 km wässrige Harnstofflösung zum Entsticken des Abgases in den Abgasstrang zu injizieren.

Die Anzeigeeinrichtung 30 kann in einem Fahrzeuginnenraum, insbesondere in/an einer Armaturentafel des Kraftfahrzeugs angebracht sein. Ferner kann die Anzeigeeinrichtung 30 auch in/an einer Tankmulde und/oder in/an einer Tankklappe angeordnet sein. Insbesondere kann die Anzeigeeinrichtung an einer Innenseite einer Tankklappe angeordnet sein. Alternativ und/oder zusätzlich kann die Anzeigeeinrichtung 40 auch als mobiles Endgerät, beispielsweise als Mobiltelefon/Smartphone ausgebildet sein, wobei in diesem Fall das Warnsignal und vorzugsweise auch die die Füllstände des Kraftstoffbehälters 10 und/oder des Harnstoffbehälters 20 repräsentierenden Daten auf dem mobilen Endgerät angezeigt werden.

Bei dem dargestellten Ausführungsbeispiel umfasst das Betriebsflüssigkeitsbehältersystems ferner einen Neigungssensor 50, mittels dem die Neigung des Kraftstoffbehälters 10 und/oder des Harnstoffbehälters 20 bestimmbar ist. Der Neigungssensor 50 ist mit der Tanksteuereinrichtung 30 mittels einer dritten Datenleitung 103 verbunden, wobei die dritte Datenleitung 103 mit einer dritten Datenempfangseinheit 33 der Tanksteuereinrichtung 30 verbunden ist. Folglich ist die Tanksteuereinrichtung 30 ferner dazu ausgebildet, zusätzlich zu den vom Kraftstofffüllstandsensor 11 und vom Harnstofffüllstandsensor 21 übertragenen Daten weitere eine Neigung des Betriebsflüssigkeitsbehältersystems repräsentierenden Daten zu empfangen. Die Tanksteuereinrichtung 30 ermittelt dabei mittels der vom Kraftstofffüllstandsensor 11 und vom Harnstofffüllstandsensor 21 übertragenen Daten und der die Neigung des Betriebsflüssigkeitsbehältersystems repräsentierenden Daten einen Ist-Füllstand des Kraftstoffbehälters 10 und einen Ist-Füllstand des Harnstoffbehälters 20. Somit können die Füllstände des Kraftstoffbehälters 10 und des Harnstoffbehälters 20 auch bei einer Schrägstellung des Betriebsflüssigkeitsbehältersystems genau ermittelt werden.

Bei dem dargestellten Ausführungsbeispiel des Betriebsflüssigkeitsbehältersystems weist der Kraftstoffbehälter 10 einen als Betriebsentlüftungsventil 14 ausgebildeten Aktuator 14 und einen als Betankungsentlüftungsventil 15 ausgebildeten Aktuator 15 auf. Das Betriebsentlüftungsventil 14 ist über eine Betriebsentlüftungsleitung 16 und eine Entlüftungsleitung 18 mit dem Einfüllstutzen 13 des Kraftstoffbehälters 10 fluidverbunden. Das Betankungsentlüftungsventil 15 ist über eine Betankungsentlüftungsleitung 17 und eine Entlüftungsleitung 18 ebenfalls mit dem Einfüllstutzen 13 des Kraftstoffbehälters 10 fluidverbunden. Die Betriebsentlüftungsleitung 16 und die Betankungsentlüftungsleitung 17 münden jeweils in der Entlüftungsleitung 18.

Bei dem dargestellten Ausführungsbeispiel ist/sind das Betriebsentlüftungsventil 14 und/oder das Betankungsentlüftungsventil 15 elektrisch und/oder elektromagnetisch und/oder elektromechanisch zwischen einer Offenstellung und einer Schließstellung verstellbar. In der Offenstellung des Betriebsentlüftungsventil 14 und/oder des Betankungsentlüftungsventils 15 ist der Kraftstoffbehälters 10 mit der Entlüftungsleitung 18 und somit mit dem Einfüllstutzen 13 fluidverbunden. In der Schließstellung des Betriebsentlüftungsventil 14 und des Betankungsentlüftungsventils 15 ist der Kraftstoffbehälter 10 hingegen von der Entlüftungsleitung 18 und somit von dem Einfüllstutzen 13 fluidgetrennt.

Die Tanksteuereinrichtung 30 kann dazu ausgebildet sein, an das Betriebsentlüftungsventil 14 und/oder an das Betankungsentlüftungsventil 15 ein Befüllstoppsignal zu übertragen, wenn die zweite Distanz kleiner oder gleich der ersten Distanz ist. Bei Empfang des Befüllstoppsignals wird das Betriebsentlüftungsventil 14 und/oder das Betankungsentlüftungsventil 15 in dessen/deren Schließstellung überführt, so dass eine Entlüftung des Kraftstoffbehälters 10 unterbrochen wird. Folglich steigt bei einer weiteren Einfüllung von Kraftstoff K in den Kraftstoffbehälter 10 der Druck innerhalb des Kraftstoffbehälters 10 an, so dass eine Kraftstoffsäule im Einfüllrohr 12 ansteigt, bis eine Abschaltöffnung eines in der Figur 1 nicht dargestellten Zapfventils erreicht wird, woraufhin ein Ausströmen von Kraftstoff aus dem Zapfventil beendet wird.

Durch eine entsprechende Ausbildung des Betriebsflüssigkeitsbehältersystems kann erreicht werden, dass eine Befüllung des Kraftstoffbehälters 10 automatisch beendet wird, wenn die mit der dann im Kraftstoffbehälter 10 befindlichen Menge an Kraftstoff zurücklegbare Distanz maximal der Distanz entspricht, für die genügend Harnstofflösung H im Harnstoffbehälter 20 bevorratet ist. Selbstverständlich kann nach diesem automatischen Beenden des Befüllvorganges vom Betanker der Befüllvorgang manuell fortgesetzt werden, wobei dazu zumindest das Betankungsentlüftungsventil wieder in dessen Offenstellung überführt werden muss. Dieses kann automatisch erfolgen.

### Bezugszeichenliste:

- 10: Kraftstoffbehälter / Kraftfahrzeugtank
- 11: Kraftstoff Füllstand Sensor
- 12: Einfüllrohr (des Kraftstoffbehälters)
- 13: Einfüllstutzen (des Kraftstoffbehälters)
- 14: Aktuator / Betriebsentlüftungsventil
- 15: Aktuator / Betankungsentlüftungsventil
- 16: Betriebsentlüftungsleitung
- 17: Betankungsentlüftungsleitung
- 18: Entlüftungsleitung
- 20: Harnstoffbehälter / SCR-Behälter
- 21: Harnstofffüllstandsensor
- 22: Einfüllrohr (des Harnstoffbehälters)
- 23: Einfüllstutzen (des Harnstoffbehälters)
- 30: Tanksteuereinrichtung / Tanksteuerungseinrichtung
- 31: (erste) Datenempfangseinheit / Signalempfangseinheit
- 32: (zweite) Datenempfangseinheit / Signalempfangseinheit
- 33: (dritte) Datenempfangseinheit / Signalempfangseinheit
- 34: (erste) Datenausgabeeinheit / Signalausgabeeinheit
- 35: (zweite) Datenausgabeeinheit / Signalausgabeeinheit
- 40: Anzeigeeinrichtung
- 41: Füllstandanzeigeelement für Kraftstoffbehälter
- 42: erstes Reichweitenanzeigeelement
- 43: Füllstandanzeigeelement für Harnstoffbehälter
- 44: zweites Reichweitenanzeigeelement
- 45: Anzeigeelement für Warnsignal
- 50: Neigungssensor
- 101: (erste) Datenleitung
- 102: (zweite) Datenleitung
- 103: (dritte) Datenleitung
- 104: (vierte) Datenleitung
- 105: (fünfte) Datenleitung
- G: Gasvolumen (im Betriebsflüssigkeitsbehälter / Kraftfahrzeugtank)
- H: Harnstofflösung (im Harnstoffbehälter)
- K: Kraftstoff (im Kraftstoffbehälter)

## Patentansprüche

1. Betriebsflüssigkeitsbehältersystem, umfassend
- einen Kraftstoffbehälter (10) mit einem Kraftstofffüllstandsensor (11);
- einen Harnstoffbehälter (20) mit einem Harnstofffüllstandsensor (21);
- eine Tanksteuereinrichtung (30), die mit dem Kraftstofffüllstandsensor (11) zum Empfangen von einen Füllstand des Kraftstoffbehälters (10) repräsentierenden Daten und mit dem Harnstofffüllstandsensor (21) zum Empfangen von einen Füllstand des Harnstoffbehälters (20) repräsentierenden Daten verbunden ist,
wobei das Betriebsflüssigkeitsbehältersystem folgende Eigenschaften aufweist:
- die Tanksteuereinrichtung (30) ist dazu ausgebildet, unter Berücksichtigung der den Füllstand des Kraftstoffbehälters (10) repräsentierenden Daten eine mit der im Kraftstoffbehälter (10) befindlichen Kraftstoffmenge zurücklegbare erste Distanz zu ermitteln;
- die Tanksteuereinrichtung (30) ist ferner dazu ausgebildet, unter Berücksichtigung der den Füllstand des Harnstoffbehälters (20) repräsentierenden Daten eine mit der im Harnstoffbehälter (20) befindlichen Harnstoffmenge zurücklegbare zweite Distanz zu ermitteln; und
- die Tanksteuereinrichtung (30) ist dazu ausgebildet, ein Warnsignal auszugeben, wenn die zweite Distanz kleiner oder gleich der ersten Distanz ist,
wobei das Betriebsflüssigkeitsbehältersystem durch folgende Merkmale **gekennzeichnet** ist:
- der Kraftstoffbehälter (10) umfasst zumindest einen elektrisch und/oder elektromagnetisch und/oder elektromechanisch betätigbaren Aktuator (14, 15), mittels dem ein Beenden eines Befüllvorganges des Kraftstoffbehälters (10) initiierbar ist;
- die Tanksteuereinrichtung (30) ist mit dem Aktuator (14, 15) zum Übertragen von Signalen an den Aktuator (14, 15) verbunden; und
- die Tanksteuereinrichtung (30) ist dazu ausgebildet, an den Aktuator (14, 15) ein Befüllstoppsignal zu übertragen, wenn die zweite Distanz kleiner oder gleich der ersten Distanz ist.

2. Betriebsflüssigkeitsbehältersystem nach Anspruch 1, **gekennzeichnet durch** die folgenden Merkmale:
- das Betriebsflüssigkeitsbehältersystem umfasst ferner eine Anzeigeeinrichtung (40), die mit der Tanksteuereinrichtung (30) zum Übertragen des Warnsignals und/oder der den Füllstand des Kraftstoffbehälters (10) und/oder der den Füllstand des Harnstoffbehälters (20) repräsentierenden Daten verbunden ist; und
- die Anzeigeeinrichtung (40) ist dazu ausgebildet, das Warnsignal und/oder die den Füllstand des Kraftstoffbehälters (10) und/oder den Füllstand des Harnstoffbehälters (20) repräsentierenden Daten darzustellen.

3. Betriebsflüssigkeitsbehältersystem nach einem der vorhergehenden Ansprüche, **dadurch gekennzeichnet, dass** die Anzeigeeinrichtung (40) in einem Fahrzeuginnenraum, insbesondere in/an einer Armaturentafel eines Kraftfahrzeugs, und/oder in/an einer Tankmulde und/oder in/an einer Tankklappe angeordnet ist.

4. Betriebsflüssigkeitsbehältersystem nach einem der vorhergehenden Ansprüche, **gekennzeichnet durch** die folgenden Merkmale:
- die Tanksteuereinrichtung (30) ist dazu ausgebildet, zusätzlich zu den vom Kraftstofffüllstandsensor (11) und vom Harnstofffüllstandsensor (21) übertragenen Daten weitere eine Neigung des Betriebsflüssigkeitsbehältersystems repräsentierende Daten zu empfangen; und
- die Tanksteuereinrichtung (30) ist dazu ausgebildet, mittels der vom Kraftstofffüllstandsensor (11) und vom Harnstofffüllstandsensor (21) übertragenen Daten und der die Neigung des Betriebsflüssigkeitsbehältersystems repräsentierenden Daten einen Ist-Füllstand des Kraftstoffbehälters (10) und einen Ist-Füllstand des Harnstoffbehälters (20) zu ermitteln.

5. Betriebsflüssigkeitsbehältersystem nach Anspruch 4, **gekennzeichnet durch** die folgenden Merkmale:
- das Betriebsflüssigkeitsbehältersystem umfasst einen Neigungssensor (50), mittels dem die Neigung des Kraftstoffbehälters (10) und/oder des Harnstoffbehälters (20) bestimmbar ist; und
- der Neigungssensor (50) ist mit der Tanksteuereinrichtung (30) zum Übertragen von die Neigung des Kraftstoffbehälters (10) und/oder die Neigung des Harnstoffbehälters (20) repräsentierenden Daten an die Tanksteuereinrichtung (30) verbunden.

6. Betriebsflüssigkeitsbehältersystem nach einem der vorhergehenden Ansprüche, **gekennzeichnet durch** die folgenden Merkmale:
- der zumindest eine Aktuator (14, 15) ist als ein Betriebs- und/oder Betankungsentlüftungsventil (14, 15) ausgebildet, das im Kraftstoffbehälter (10) angeordnet ist;
- das Betriebs- und/oder Betankungsentlüftungsventil (14, 15) ist elektrisch und/oder elektromagnetisch und/oder elektromechanisch zwischen einer Offenstellung und einer Schließstellung betätigbar;
- in der Offenstellung des Betriebs- und/oder Betankungsentlüftungsventils (14, 15) ist der Kraftstoffbehälter (10) mittels des Betriebs- und/oder Betankungsentlüftungsventils (14, 15) mit einer Entlüftungsleitung (16, 17, 18) fluidverbunden; und
- in der Schließstellung des Betriebs- und/oder Betankungsentlüftungsventils (14, 15) ist der Kraftstoffbehälter (10) von der Entlüftungsleitung (16, 17, 18) mittels des Betriebs- und/oder Betankungsentlüftungsventils (14, 15) fluidgetrennt.

7. Betriebsflüssigkeitsbehältersystem nach einem der vorhergehenden Ansprüche, **gekennzeichnet durch** die folgenden Merkmale:
- das Betriebsflüssigkeitsbehältersystem umfasst ferner einen Qualitätssensor zum Bestimmen einer Konzentration des Harnstoffanteils der im Harnstoffbehälter (20) befindlichen Harnstofflösung;
- die Tanksteuereinrichtung (30) ist dazu ausgebildet, vor und nach einem Befüllvorgang des Harnstoffbehälters (20) die Konzentration des Harnstoffanteils der im Harnstoffbehälter (20) befindlichen Harnstofflösung mittels des Qualitätssensors zu ermitteln;
- die Tanksteuereinrichtung (30) ist dazu ausgebildet, vor und nach einem Befüllvorgang des Harnstoffbehälters (20) die Menge der im Harnstoffbehälter (20) befindlichen Harnstofflösung mittels des Harnstofffüllstandsensors (21) zu ermitteln; und
- die Tanksteuereinrichtung (30) ist dazu ausgebildet, die Konzentration des Harnstoffanteils der während des Befüllvorganges eingefüllten Harnstofflösung dadurch zu errechnen, dass der Quotient des Produktes der Konzentration der Harnstofflösung vor dem Befüllvorgang mit der Betriebsflüssigkeitsmenge vor dem Befüllvorgang mit der Betriebsflüssigkeitsmenge nach dem Befüllvorgang gebildet wird.

8. Verfahren zum Befüllen eines Kraftstoffbehälters (10) eines zusätzlich zu diesem einen Harnstoffbehälter (20) umfassenden Betriebsflüssigkeitsbehältersystems für ein Kraftfahrzeug, wobei das Verfahren folgende Verfahrensschritte umfasst:
- Ermitteln eines Füllstandes des Kraftstoffbehälters (10);
- Ermitteln einer ersten Distanz, die mit dem im Kraftstoffbehälter befindlichen Kraftstoff mit dem Kraftfahrzeug zurücklegbar ist;
- Ermitteln eines Füllstandes des Harnstoffbehälters (20);
- Ermitteln einer zweiten Distanz, die mit der im Harnstoffbehälter befindlichen Harnstofflösung mit dem Kraftfahrzeug unter Einspritzung der Harnstofflösung in einen Abgasstrang des Kraftfahrzeugs zurücklegbar ist;
- Ausgeben eines Warnsignals, wenn die zweite Distanz kleiner oder gleich der ersten Distanz ist, und
- Übertragen eines Befüllstopsignals an einen elektrisch und/oder elektromagnetisch und/oder elektromechanisch betätigbaren Aktuator (14, 15) des Kraftstoffbehälters (10), mittels dem ein Beenden des Befüllvorganges des Kraftstoffbehälters (10) initiierbar ist, wenn die zweite Distanz kleiner oder gleich der ersten Distanz ist.

## Claims

1. An operating liquid container system, comprising
- a fuel container (10) with a fuel fill level sensor (11);
- a urea container (20) with a urea fill level sensor (21);
- a tank control device (30) which is connected to the fuel fill level sensor (11) in order to receive data representing a fill level of the fuel container (10) and to the urea fill level sensor (21) in order to receive data representing a fill level of the urea container (20),
wherein the operating liquid container system has the following characteristics:
- the tank control device (30) is designed to determine, taking into consideration the data representing the fill level of the fuel container (10), a first distance that can be covered with the fuel quantity situated in the fuel container (10);
- the tank control device (30) is furthermore designed to determine, taking into consideration the data representing the fill level of the urea container (20), a second distance that can be covered with the urea quantity situated in the urea container (20); and
- the tank control device (30) is designed to output a warning signal if the second distance is shorter than or equal to the first distance,
wherein the operating liquid container is **characterized by** the following features:
- the fuel container (10) comprises at least one electrically and/or electromagnetic and/or electromechanically actuatable actuator (14, 15) by means of which an ending of a filling process of the fuel container (10) can be initiated;
- the tank control device (30) is connected to the actuator (14, 15) in order to transmit signals to the actuator (14, 15); and
- the tank control device (30) is designed to transmit a filling stop signal to the actuator (14, 15) if the second distance is shorter or equal to than the first distance.

2. The operating liquid container system as claimed in claim 1, **characterized by** the following features:
- the operating liquid container system furthermore comprises a display device (40) which is connected to the tank control device (30) for the transmission of the warning signal and/or of the data representing the fill level of the fuel container (10) and/or of the data representing the fill level of the urea container (20); and
- the display device (40) is designed to display the warning signal and/or the data representing the fill level of the fuel container (10) and/or the fill level of the urea container (20).

3. The operating liquid container system as claimed in one of the preceding claims, **characterized in that** the display device (40) is arranged in a vehicle interior compartment, in particular in/on a dashboard of a motor vehicle, and/or in/on a filler-neck compartment and/or in/on a tank flap.

4. The operating liquid container system as claimed in one of the preceding claims, **characterized by** the following features:
- the tank control device (30) is designed to receive not only the data transmitted by the fuel fill level sensor (11) and by the urea fill level sensor (21) but also further data representing an inclination of the operating liquid container system; and
- the tank control device (30) is designed to determine an actual fill level of the fuel container (10) and an actual fill level of the urea container (20) by means of the data transmitted by the fuel fill level sensor (11) and by the urea fill level sensor (21) and the data representing the inclination of the operating liquid container system.

5. The operating liquid container system as claimed in claim 4, **characterized by** the following features:
- the operating liquid container system comprises an inclination sensor (50) by means of which the inclination of the fuel container (10) and/or of the urea container (20) can be determined; and
- the inclination sensor (50) is connected to the tank control device (30) in order to transmit data representing the inclination of the fuel container (10) and/or the inclination of the urea container (20) to the tank control device (30).

6. The operating liquid container system as claimed in one of the preceding claims, **characterized by** the following features:
- the at least one actuator (14, 15) is formed as an operational and/or refueling vent valve (14, 15) which is arranged in the fuel container (10);
- the operational and/or refueling vent valve (14, 15) is electrically and/or electromagnetically and/or electromechanically actuatable between an open position and a closed position;
- in the open position of the operational and/or refueling vent valve (14, 15), the fuel container (10) is fluidically connected by means of the operational and/or refueling vent valve (14, 15) to a vent line (16, 17, 18); and
- in the closed position of the operational and/or refueling vent valve (14, 15), the fuel container (10) is fluidically separated from the vent line (16, 17, 18) by means of the operational and/or refueling vent valve (14, 15).

7. The operating liquid container system as claimed in one of the preceding claims, **characterized by** the following features:
- the operating liquid container system furthermore comprises a quality sensor for determining a concentration of the urea fraction of the urea solution situated in the urea container (20);
- the tank control device (30) is designed to determine the concentration of the urea fraction of the urea solution situated in the urea container (20) by means of the quality sensor before and after a filling process of the urea container (20) ;
- the tank control device (30) is designed to determine the quantity of the urea solution situated in the urea container (20) by means of the urea fill level sensor (21) before and after a filling process of the urea container (20); and
- the tank control device (30) is designed to calculate the concentration of the urea fraction of the urea solution introduced during the filling process by forming the quotient of the product of the concentration of the urea solution before the filling process with the operating liquid quantity before the filling process, with the operating liquid quantity after the filling process.

8. A method for filling a fuel container (10) of an operating liquid container system, which comprises a urea container (20) in addition to said fuel container, for a motor vehicle, wherein the method comprises the following method steps:
- determining a fill level of the fuel container (10);
- determining a first distance that can be covered by the motor vehicle with the fuel situated in the fuel container;
- determining a fill level of the urea container (20);
- determining a second distance that can be covered by the motor vehicle with the urea solution situated in the urea container, with the urea solution being injected into an exhaust tract of the motor vehicle; and
- outputting a warning signal if the second distance is shorter or equal to the first distance,,
- transmitting a filling stop signal to an electrically and/or electromagnetically and/or electromechanically actuatable actuator (14, 15) of the fuel container (10) by means of which an ending of a filling process of the fuel container (10) can be initiated if the second distance is shorter or equal to the first distance.

## Revendications

1. Système de réservoirs de liquide de fonctionnement, comprenant
- un réservoir de carburant (10) comportant un capteur de niveau de carburant (11) ;
- un réservoir d'urée (20) comportant un capteur de niveau d'urée (21) ;
- un dispositif de commande de réservoir (30) qui est connecté au capteur de niveau de carburant (11) pour la réception de données représentant un niveau du réservoir de carburant (10) et au capteur de niveau d'urée (21) pour la réception de données représentant un niveau du réservoir d'urée (20),
dans lequel le système de réservoirs de liquide de fonctionnement présente les propriétés suivantes :
- le dispositif de commande de réservoir (30) est configuré pour déterminer, en tenant compte des données représentant le niveau du réservoir de carburant (10), une première distance pouvant être parcourue au moyen de la quantité de carburant se trouvant dans le réservoir de carburant (10) ;
- le dispositif de commande de réservoir (30) est en outre configuré pour déterminer, en tenant compte des données représentant le niveau du réservoir d'urée (20), une seconde distance pouvant être parcourue au moyen de la quantité d'urée se trouvant dans le réservoir d'urée (20) ; et
- le dispositif de commande de réservoir (30) est configuré pour émettre un signal d'avertissement lorsque la seconde distance est inférieure ou égale à la première distance,
dans lequel le système de réservoirs de liquide de fonctionnement est **caractérisé par** les caractéristiques suivantes :
- le réservoir de carburant (10) comprend au moins un actionneur (14, 15) pouvant être actionné de manière électrique et/ou électromagnétique et/ou électromécanique, au moyen duquel l'arrêt d'un processus de remplissage du réservoir de carburant (10) peut être lancé ;
- le dispositif de commande de réservoir (30) est connecté à l'actionneur (14, 15) pour la transmission de signaux à l'actionneur (14, 15) ; et
- le dispositif de commande de réservoir (30) est configuré pour transmettre un signal d'arrêt de remplissage à l'actionneur (14, 15) lorsque la seconde distance est inférieure ou égale à la première distance.

2. Système de réservoirs de liquide de fonctionnement selon la revendication 1, **caractérisé par** les caractéristiques suivantes :
- le système de réservoirs de liquide de fonctionnement comprend en outre un dispositif d'affichage (40) qui est connecté au dispositif de commande de réservoir (30) pour la transmission du signal d'avertissement et/ou des données représentant le niveau du réservoir de carburant (10) et/ou des données représentant le niveau du réservoir d'urée (20) ; et
- le dispositif d'affichage (40) est configuré pour présenter le signal d'avertissement et/ou les données représentant le niveau du réservoir de carburant (10) et/ou le niveau du réservoir d'urée (20).

3. Système de réservoirs de liquide de fonctionnement selon l'une des revendications précédentes, **caractérisé en ce que** le dispositif d'affichage (40) est disposé dans un habitacle de véhicule, en particulier dans/sur un tableau de bord d'un véhicule automobile, et/ou dans/sur une cuve de réservoir et/ou dans/sur une trappe de réservoir.

4. Système de réservoirs de liquide de fonctionnement selon l'une des revendications précédentes, **caractérisé par** les caractéristiques suivantes :
- le dispositif de commande de réservoir (30) est configuré pour recevoir, en plus des données transmises par le capteur de niveau de carburant (11) et par le capteur de niveau d'urée (21), d'autres données représentant une inclinaison du système de réservoirs de liquide de fonctionnement ; et
- le dispositif de commande de réservoir (30) est configuré pour déterminer un niveau réel du réservoir de carburant (10) et un niveau réel du réservoir d'urée (20) au moyen des données transmises par le capteur de niveau de carburant (11) et par le capteur de niveau d'urée (21) et des données représentant l'inclinaison du système de réservoirs de liquide de fonctionnement.

5. Système de réservoirs de liquide de fonctionnement selon la revendication 4, **caractérisé par** les caractéristiques suivantes :
- le système de réservoirs de liquide de fonctionnement comprend un capteur d'inclinaison (50) au moyen duquel l'inclinaison du réservoir de carburant (10) et/ou du réservoir d'urée (20) peut être déterminée ; et
- le capteur d'inclinaison (50) est connecté au dispositif de commande de réservoir (30) pour la transmission de données représentant l'inclinaison du réservoir de carburant (10) et/ou l'inclinaison du réservoir d'urée (20) au dispositif de commande de réservoir (30).

6. Système de réservoirs de liquide de fonctionnement selon l'une des revendications précédentes, **caractérisé par** les caractéristiques suivantes :
- l'au moins un actionneur (14, 15) est conçu comme une soupape de purge de fonctionnement et/ou de ravitaillement (14, 15) qui est disposée dans le réservoir de carburant (10) ;
- la soupape de purge de fonctionnement et/ou de ravitaillement (14, 15) peut être actionnée de manière électrique et/ou électromagnétique et/ou électromécanique entre une position ouverte et une position fermée ;
- dans la position ouverte de la soupape de purge de fonctionnement et/ou de ravitaillement (14, 15), le réservoir de carburant (10) est relié fluidiquement à une conduite de purge (16, 17, 18) au moyen de la soupape de purge de fonctionnement et/ou de ravitaillement (14, 15) ; et
- dans la position fermée de la soupape de purge de fonctionnement et/ou de ravitaillement (14, 15), le réservoir de carburant (10) est séparé fluidiquement de la conduite de purge (16, 17, 18) au moyen de la soupape de purge de fonctionnement et/ou de ravitaillement (14, 15).

7. Système de réservoirs de liquide de fonctionnement selon l'une des revendications précédentes, **caractérisé par** les caractéristiques suivantes :
- le système de réservoirs de liquide de fonctionnement comprend en outre un capteur de qualité permettant de déterminer une concentration de la proportion d'urée de la solution d'urée se trouvant dans le réservoir d'urée (20) ;
- le dispositif de commande de réservoir (30) est configuré pour déterminer, avant et après un processus de remplissage du réservoir d'urée (20), la concentration de la proportion d'urée de la solution d'urée se trouvant dans le réservoir d'urée (20) au moyen du capteur de qualité ;
- le dispositif de commande de réservoir (30) est configuré pour déterminer, avant et après un processus de remplissage du réservoir d'urée (20), la quantité de solution d'urée se trouvant dans le réservoir d'urée (20) au moyen du capteur de niveau d'urée (21) ; et
- le dispositif de commande de réservoir (30) est configuré pour calculer la concentration de la proportion d'urée de la solution d'urée introduite pendant le processus de remplissage par le fait que le quotient du produit de la concentration de la solution d'urée avant le processus de remplissage par la quantité de liquide de fonctionnement avant le processus de remplissage par la quantité de liquide de fonctionnement après le processus de remplissage est formé.

8. Procédé permettant le remplissage d'un réservoir de carburant (10) d'un système de réservoirs de liquide de fonctionnement pour un véhicule automobile, lequel système comprenant, en plus dudit réservoir de carburant, un réservoir d'urée (20), dans lequel le procédé comprend les étapes de procédé suivantes :
- détermination d'un niveau du réservoir de carburant (10) ;
- détermination d'une première distance pouvant être parcourue par le véhicule automobile avec le carburant se trouvant dans le réservoir de carburant ;
- détermination d'un niveau du réservoir d'urée (20) ;
- détermination d'une seconde distance pouvant être parcourue par le véhicule automobile avec la solution d'urée se trouvant dans le réservoir d'urée en injectant la solution d'urée dans une conduite de gaz d'échappement du véhicule automobile ;
- émission d'un signal d'avertissement lorsque la seconde distance est inférieure ou égale à la première distance, et
- transmission d'un signal d'arrêt de remplissage à un actionneur (14, 15) du réservoir de carburant (10) pouvant être actionné de manière électrique et/ou électromagnétique et/ou électromécanique, au moyen duquel actionneur l'arrêt du processus de remplissage du réservoir de carburant (10) peut être lancé lorsque la seconde distance est inférieure ou égale à la première distance.
